# EUROPEAN PATENT SPECIFICATION

(11) **EP 4 536 604 B1**
(45) Date of publication and mention of the grant of the patent: **04.11.2026**
(21) Application number: 23731956.1
(22) Date of filing: 07.06.2023
(51) Int. Cl.: C04B 11/028

(54) **PROCESS AND SYSTEM FOR THE CALCINATION OF GYPSUM**
VERFAHREN UND SYSTEM ZUR KALZINIERUNG VON GIPS
PROCÉDÉ ET SYSTÈME DE CALCINATION DE GYPSE

(30) Priority: 08.06.2022 EP 22000152
(43) Date of publication of application: 16.04.2025
(73) Proprietor: Knauf Gips KG, 97346 Iphofen (DE)
(72) Inventor: BAESE, Rauno, 97346 Iphofen (DE); GEIGER, Raphael, 97346 Iphofen (DE)
(74) Representative: Meissner Bolte Partnerschaft mbB
(86) International application number: PCT/EP2023/025273
(87) International publication number: WO 2023/237231

(56) References cited:
- EP-A1- 0 010 233
- WO-A1-96/36471
- GB-A- 1 268 396

## Description

The present invention concerns a process for the calcination of gypsum in a heatable extruder, wherein the gypsum is feed into the extruder and heated to a temperature of from 150°C to 350°C to thereby convert the gypsum to calcined gypsum with a content of calcium hemihydrate of at least 50 wt.-%. The present invention further concerns a system, which is adapted to such preparation of calcined gypsum and comprises an appropriate heatable extruder and the use of a heatable extruder for the calcination of gypsum.

### State of the art

In the construction of buildings, one of the most common building elements are gypsum plasterboards, which are also known as gypsum panelling, gypsum building panels, gypsum boards, gypsum panel, or wallboard, which are primarily used in the construction of walls and/or ceilings. Such gypsum plasterboards are regularly produced by reacting calcined gypsum with water, whereupon the calcium sulphate hemihydrate therein forms calcium sulphate dihydrate (gypsum) via uptake of water into the crystal lattice. The calcined gypsum is produced by heat/calcination treatment of gypsum, and is typically comprised to a predominant extent of calcium sulphate hemihydrate with minor amounts of the gypsum starting material and calcium sulphate anhydrite. Further, calcined gypsum is also used for plastering or (floor) screed. There, also a reaction with water to form calcium sulphate dihydrate (gypsum) takes place.

Until now, the calcined gypsum is usually produced in large industrial ovens, where the gypsum is heated to temperatures about 80 °C - 180°C. At this temperature, the calcium sulphate dihydrate (CaSO₄ x 2 H₂O) releases water to the atmosphere to thus form both calcium sulphate hemihydrate and calcium sulphate anhydrite. In this process, the heat flow is a key parameter to control as in areas of the oven, where the temperature is not sufficiently high (cold spots) the conversion of the calcium sulphate dihydrate to the respective hemihydrate may not be sufficient, whereas in areas, where the temperature is too high for optimal conversion (hot spots) there may be excessive formation of the respective anhydrite. Here, higher quantity of calcium sulphate dihydrate or calcium sulphate anhydrite has an unfavourable impact on the processing characteristics when e.g. a gypsum hemihydrate slurry is prepared for the fabrication of a plasterboard. In addition, a higher quantity of gypsum anhydrite is also unfavourable from an economic point of view, as the removal of water from gypsum is energy intensive, and, when the hemihydrate is "overdehydrated" to anhydrite, provides no benefit. Thus, the production of calcined gypsum process is difficult to run in an economic manner.

Whereas the above described heating process is the predominant process for the production of calcium sulphate hemihydrate, also other processes are known in the prior art for the production thereof. These include wet processes, where the calcium sulphate hemihydrate is produced from an aqueous suspension of the dihydrate precursor at elevated temperatures and pressure or by conversion in an atmosphere of saturated water vapour in a pressure vessel such as an autoclave. An obvious problem with such process is however, that after the conversion, at least part of the water has to be removed, as otherwise upon cooling the calcium sulphate hemihydrate would again take up water and would thus be reconverted to calcium sulphate dihydrate.

With rising energy prices, especially in the last years, process efficiency has become an ever more relevant problem for industrial processes. Accordingly, there is a need for a production process of calcined gypsum with a high content of calcium sulphate hemihydrate, which provides this product in stable powder form and which has improved production efficiency compared to conventional processes. In particular, there is a need for a process which in a highly reproducible manner provides a gypsum product with a high content of calcium sulphate hemihydrate, but with little by-product of the respective dihydrate and anhydrite.

Extruders have been widely used in particular for plastic processing such as blow moulding. Regularly, for extrusion processing extruders have one or more screws which move(s) and optionally compact(s) the material to be processed to the end of the extruder, where the material is discharged form a die, and the material going through the extruder screw(s) can be heated and fluidised. Extruders in such processing provide the advantage that energy input can also be adjusted via the geometry of the extruder screw or screws and the interior of the extruder. In addition, via the rotation of the screws different materials can be sufficiently mixed, while providing a substantially uniform temperature distribution at a given position from the entry of the extruder.

The use of extruders for the processing of gypsum has previously also been described, but in this case extruders have been used for the preparation of a gypsum paste (e.g. from (gypsum) anhydrite, see e. g. US 3872204 A), where the paste is prepared by addition of water and is then discharged from the die to produce articles. Other applications of extruders for gypsum processing are described in CN 103043621 B and CN 203128194 U, where the gypsum is converted to the respective hemihydrate and anhydrite, and the anhydrite is then decomposed to calcium oxide, SO₂ and oxygen. The SO₂ is then collected and is subsequently used for the production of sulphuric acid.

WO 2009/105424 A1 describes a process for the production of calcined gypsum, where hot combustion gases and air are injected into a pressurized reactor to generate a fluid bed of gypsum particles thereon, whereby, due to the contact with the hot gases, the gypsum is converted to calcined gypsum.

GB1268396 describes a process for the continuous production of calcium sulfate hemihydrate, in which respective dihydrate is heated in a heating device with screw conveyors.

### Description of the invention

In the investigations, which are underlying the present invention, it has unexpectedly been found that an extruder can be used for the production of calcium sulphate hemihydrate with a high ratio of hemihydrate to dihydrate and anhydrite. To this end, the calcium sulphate dihydrate in a powder or paste form is fed into the extruder and is heated therein to a temperature of 150°C to 350°C. Via parameters of the heat temperature of the extruder and the screw speed, the residence time of the calcium sulphate dihydrate can be adjusted in an optimal fashion to provide a product, which comprises a high content of calcium sulphate hemihydrate with minimal contents of the respective dihydrate and anhydrite. In addition, the extruding process ensures that inhomogeneous heating of the calcium sulphate dihydrate, which may give rise to higher contents of dihydrate and/or anhydrite is avoided as much as possible.

Accordingly, in a first aspect the present invention is concerned with a process for the calcination of gypsum in a heatable extruder, comprising or consisting of the following steps:
i) providing raw gypsum as a powder or as a paste;
ii) feeding the raw gypsum into a heatable extruder having a calcination zone and optionally a mixing zone;
iii) heating the gypsum in the calcination zone of the extruder, particularly to temperatures of between 150°C and 350°C, to provide a calcined gypsum, wherein at least 50 wt.-% of the gypsum has been converted to calciumsulfate hemihydrate, while withdrawing crystal water from the raw gypsum, wherein the heating is provided via a heated screw and/or a heated extruder barrel as well as the frictional energy during extrusion, and
iv) discharging the calcined gypsum from the extruder.

In the present invention the term "dihydrate" relates to CaSO₄ * 2 H₂O, for which the term "calcium sulphate dihydrate" may be used in this invention with interchangeable meaning. In the present invention the term "raw gypsum" is directed to gypsum having CaSO₄ * 2 H₂O as main ingredient, regardless of its origin, so that it also encompasses mineral CaSO₄ * 2 H₂O, waste gypsum materials from recycled gypsum panels, FGD-gypsum (flue gas desulfurization gypsum) and the like, as long as the main ingredient is CaSO₄ * 2 H₂O.

The term "gypsum" or "gypsum material" relates to CaSO₄ independent of its hydration state and encompasses the dihydrate, the hemihydrate and mixtures of various hydration states, the exact meaning is readily apparent to the person skilled in the art from the respective context.

The term "calcined gypsum" relates to gypsum, which has been subjected to a heat treatment, such that at least part of the calcium sulphate dihydrate therein has been converted to calcium sulphate hemihydrate (CaSO₄ * ½ H₂O) or calcium sulphate anhydrite ("CaSO₄" or "CaSO₄ * 0 H₂O"). In the present invention the terms "calcium sulphate hemihydrate", "hemihydrate", "stucco", "plaster of Paris" and "bassanite" are used interchangeably.

Hemihydrate exists in two different forms: alpha-hemihydrate and beta-hemihydrate. In the present invention generally both forms of hemihydrate are possible after the calcination, depending on the parameters set. However, especially for the calcination under (essentially) atmospheric pressure, beta-hemihydrate is preferred.

In the present invention unless otherwise stated temperatures are indicated in degrees Celsius (°C) and reactions and process steps are conducted under atmospheric pressure, i.e. about 1013 kPa. In the present invention, unless otherwise stated, pressures given are absolute pressures (i.e. not gauge). In the present invention usually are given as SI Units, where S designated seconds, Min designates Minutes and Hrs designated hours.

Summarising, according to the present invention, a paste or powder of (ground) raw gypsum is fed into an extruder, and this raw gypsum is then converted (calcined) at least partially into calcium sulphate hemihydrate (or bassanite) by means of heating. This heating can be provided via a heated screw and/or a heated extruder barrel as well as the frictional energy during extrusion.

The paste is usually a paste, which can be a) dug from the ground and is therefore earth-moist or b) formed from e. g. recycling gypsum and water to thereby e. g. reduce dusting and increase flow properties. During the course of the processing of the raw gypsum in the incentive process, the water is preferably removed together with crystal water, which is liberated on conversion of calcium sulphate dihydrate to calcium sulphate hemihydrate. In an alternative, the water may not be removed during the extrusion, and can e.g. be later removed after the calcined gypsum has been discharged.

The raw gypsum, which is used as a starting material for the inventive process, is preferably mineral CaSO₄ * 2 H₂O, FGD-gypsum or recycled gypsum with a content of at least 30 wt.-%, preferably 50 wt.-%, more preferably 80 wt.-%, even more preferably at least 85 wt.-%, still even more preferably at least 90 wt.-%, and most preferably at least 95 wt.-% calcium sulphate dihydrate. Thus, in the context of the present invention the term "main ingredient" can also mean that at least 30 wt.-% (or more) of the raw gypsum are dihydrate. On the other hand, as small quantities of constituents other that calcium sulphate dihydrate are not detrimental, it is acceptable that the content of calcium sulphate dihydrate in the raw gypsum is less than 99.5 wt.-% or even less than 99 wt.-%.

"mineral CaSO₄ * 2 H₂O" or "mineral gypsum" in this context means, that the gypsum is derived from a mineral source (e.g. from mining operation), wherein the gypsum in most cases contains minor quantities of other minerals such as calcite und dolomite. Recycled gypsum is gypsum, which is derived from e.g. a previous construction application, (e.g. as plaster board) and thus in most cases will contain quantities, preferably minor quantities of components which are not found in raw gypsum. Such components include e.g. inorganic constituents, such as fractions from deconstructed building sites comprising concrete, bricks or similar materials and/or organic constituents, such as residues or (cellulose) fibres from card- or paperboard or surfactants, which have been used in a plasterboard to create air voids for lightweight construction. FGD-gypsum is gypsum from flue-gas desulfurization, so that such gypsum will usually not contain either of relevant quantities of other minerals or residues of organic constituents.

The inventive process employs a heatable extruder to regulate the temperature, whereas in certain embodiments of the present invention the temperature can also be adjusted via the friction produced by the screw pitch. In the inventive process, the extruder can be heated directly at the beginning of the screw (i.e. the calcination zone, in order to calcine the raw gypsum) or the heating can start at some distance from where the raw gypsum material is introduced. Also, it is possible that the extruder is run at a lower temperature at the end of the extrusion screw run to thus lower the temperature of the material that is finally discharged. This is contrary to a regular operation of an extruder in plastic processing, where the temperature is usually highest at the end of the extrusion screw. Overall, there is a high degree of freedom of designing a (twin screw) extruder to tailor the process to the required product.

The heating of the extruder in the present invention can be provided by either of i) at least one entirely or partly heatable extruder screw (in some embodiments preferred), ii) one or more temperature setting devices each heating at least a part of the extruder barrel (in the following designated as "temperature setting elements"), iii) friction of the material processed in the extruder heat, and iv) other internal or external heating devices, or a combination of one or more of the heating means in i) to iv). In a preferred embodiment, the extruder is heated by at least one temperature setting element.

For the heatable extruder, it is advantageous if it has a plurality of individual temperature setting elements, which are adapted to heat a respective part of the extruder to an intended temperature. Whereas in the inventive process it is not necessary that the temperature setting elements are regulated to different temperatures, the power and heating capacity demands of the extruder will regularly be higher in the area where the gypsum is inserted into the extruder, whereas at a later stage the temperature for dehydration/calcination may only have to be maintained, for which less power supply is necessary. Accordingly, the use of a heatable extruder, which allows individual regulation of temperature setting elements, provides the advantage of more flexible and faster controllability of the heating profile, to which the gypsum is subjected while passing the heatable extruder.

In the process, crystal water, which is detached from the calcium sulphate dihydrate or water which may be introduced into the extruder as part of a paste, is preferably removed from the extruder via a one or more degassing units. The position of these units can be arranged by extruder elements containing chimneys to degas, evaporate or insert gas.

In the course of the investigations which are underlying the present invention, it has been found that an extruder which has three or more temperature setting elements provides for a particularly suitable controllability of the heating profile, which can be further improved with four or more temperature setting elements. On the other hand, since this is not necessary in most cases, and complicates the regulation of the extruder, it is preferred that the number of temperature setting elements does not exceed ten. In this respect, a "temperature setting element" is a heating unit, which heats a certain section of the extruder path, but which can also cool the respective section. Thus, the heating units are provided in consecutive sections of the extruder. Preferably the temperature setting elements can be heated to the same temperature.

As noted above, the temperature setting elements are individually controllable, so that it is possible to set each of the temperature setting elements to a different temperature. For the purposes of this invention, it is preferred however, if the individual heating elements are not set to different temperatures, but are used to balance the heating power, which is in high demand at the beginning of the calcination process (to heat up the raw gypsum to calcination temperature, and because more water is released from the raw gypsum when all of the CaSO₄ is in the "dihydrate" state, than when more of the CaSO₄ has been converted to the hemihydrate already).

As noted above, the heating can also be provided by one or more extruder screw(s), which is or are partly or entirely heatable. This has the advantage, that the raw gypsum is heated from the centre (literally only when single screw extruder is used) of the extruder and thus heated material is distributed.

In another embodiment, still other internal or external heating devices are provided, for example microwave generators or infrared lamps.

In general, the heating of the extruder can advantageously be accomplished via electricity operated temperature setting elements, which provides the advantage that the heating (in contrast to current fossil fuel driven heating processes) can be driven by electricity only, and does not require the presence of oxygen. Thus, in principle, the process can also be performed in environments without an oxygen atmosphere, as in space or other planets. In such environments, the process could also be used to prepare water, which can then be used for consumption or other applications. Accordingly, in a preferred embodiment, the inventive process is performed in a vacuum atmosphere.

Further, in some embodiments the screws, or segments of them (also called screw elements), may be of variable inclination and the inclination can be adapted prior and/or during the extrusion process. Further parameters which can be influenced by the screws are the residence time via the angle and/or the rotational speed, the grinding degree via grinding elements.

In the investigations, which are underlying the present invention, it has been found that a high conversion of calcium sulphate dihydrate in raw gypsum to calcium sulphate hemihydrate (without significant overburning to produce anhydrite) is possible when heating the gypsum to 150°C to 350°C, in particular to 160°C and 300°C and more preferably to 170°C and 250°C. At this temperature, with adjustment of the appropriate residence time, it is usually possible to convert at least 90 wt.-% of the calcium sulphate dihydrate to hemihydrate, while maintaining the content of anhydrite at a low single digit level (such as less than 5 wt.-% or preferably less than 3 wt.-%).

Another parameter, via which the ratio of the calcium sulphate dihydrate to hemihydrate and anhydrite can be influenced is the feed rate of the raw gypsum, as the skilled practitioner will appreciate that a higher feed rate will reduce the residence time of the gypsum material at the temperature in the extruder, where the calcium sulphate dihydrate in converted to hemihydrate. For the inventive process, it has been found that a raw gypsum feed rate into the heatable extruder, which is at least 2 to 6 kg/(h x EV), wherein EV is the empty volume of the heatable extruder in L (liter), provides favorable results in terms of a high content of calcium sulphate hemihydrate at low residues of dihydrate and little overburning to anhydrite. The empty volume (EV) may be e. g. 0.38 L, preferably for trials. However, for industrial production also much higher EV are possible. If the EV is much higher, distance between the inside wall of the extruder and the screw can be higher, too. However, in this case it is preferred for the energy transfer from/to the raw gypsum to have a similar distance between the inside wall of the extruder and the screw (compared to smaller EVs), which can be e. g. between 2 and 9 mm and/or using the temperature setting devices in the extruder element and/or the screw(s). In general, the filling rate of the extruder can vary. However, a filling rate of 100 % is not preferred and/or a filling rate of more than 10 % is desired, also for energy consumption reasons.

The speed of the screw, by which the gypsum is agitated or mixed in the extruder, is not subject to any relevant restrictions, as long as the speed is sufficient to mix the gypsum and ensure a homogeneous heat transfer from temperature setting elements to the gypsum. As a suitable screw speed, a speed in the range of from 50 to 200 turns/min and in particular from 80 to 150 turns/min can be mentioned. However, the screw speed is interconnected to the screw angle design.

As noted above, the residence time of the raw gypsum in the extruder, which is the time from the introduction of the raw gypsum into the extruder until the calcined gypsum is discharged from the extruder, has a relevant impact on the conversion of the calcium sulphate dihydrate to hemihydrate, as the longer the calcium sulphate dihydrate is subjected to the elevated temperatures, the more of the dihydrate will be converted to hemihydrate. On the other hand, if the residence time is too long, the risk of overburning and the production of larger amounts of anhydrite increases. In general, various residence times are possible, depending on the other parameters like screw design, amount of the fed material, grinding degree of the fed material, energy input and/or rotational speed. To ensure an advantageous compromise between these effects, the residence time and thus the calcination time can preferably adjusted to be rather short, and thus the calcination very fast, in the range of 10 s to 5 min, preferred in the range of 10 s to 2 min, more preferred in the range of 10 s to 1 min. Further, long residence times up to 3 hrs are possible, also. This could result in less energy consumption and/or a more precise control of the process. However, the residence time is also dependent on the heat transfer within the extruder.

The extruder, which is used in the process according to the present invention, may be a single screw extruder, a double or twin screw extruder, a multi-screw extruder or a planetary roll extruder. In cases of more than one screw, the screws may be arranged parallel to each other, or they may be arranged conical. They may in variants also be arranged partly parallel and partly conical (if more than two screws are present) either entirely or partly or in any other conceivable manner. In a preferred embodiment, the extruder is a twin screw extruder. More preferably, the extruder is a twin screw extruder with sectional extruder elements, separately heatable and/or coolable and a screw design adjustable to the optimised process conditions allowing for a specific thermal dosing is used.

If the extruder has more than one screw, the screws can be operated together or independently from one another.

Also, it is within the scope of the invention, and an embodiment thereof, that the extruder screw(s) can be segmented such that one segment of each screw provides a calcining zone and another segment provides a mixing zone, with a further segment optionally being present in the outlet (zone). These segments can have the same or different inclinations with respect to the longitudinal central axis of the extruder (barrel). In variants of this embodiment, the screw-segments, however, are arranged closely to each other, preferably seamless, optionally with seals in between the segments (or other means to avoid material to insert itself in the mechanisms of the screws), that the material transport is not interrupted by the change in inclination. For example, (twin-)screws can be prepared from several segments, preferably more than one per extruder element.

As conventional extruders, the extruders for use in the inventive process comprise heating and cooling systems, at least one motor, at least one transmission system and at least one electrical control system. The way the screws are driven is not particularly limited, preferably they can be driven by an electric motor.

Similarly, several types of screws may be employed in the extruder according to the present invention such as separation type screws, shear type screws, barrier types screws, split type screws and wave type screws. However, the screws can also be put together from the same or different screw elements, such as conveyor screw elements, mixing screw elements, grinding screw elements or counter-rotating conveyor screw elements. In particular, screw conveyor elements are used in the context of the present invention. Given the high variability of extruder elements as well as variability in their number and forms, the process thus provides high flexibility in adjusting the process conditions to provide calcined gypsum with tailor made composition for an intended later application.

The inventive process provides the advantage that the conversion of the calcium sulphate dihydrate to the hemihydrate is specifically controllable, so the energy necessary for the conversion can be minimized. It is preferred if the calcium sulphate dihydrate in the raw gypsum is converted at least to 80 wt.-%, more preferably to at least 90 wt.-% and even more preferably to at least 95 wt.-% to calcium sulphate hemihydrate.

After processing of at least the predominant part of the calcium sulphate dihydrate to calcium sulphate hemihydrate in the inventive process, the resulting calcined gypsum is discharged from the extruder via a respective extruder outlet. The outlet of the extruder is preferably in the form of an orifice or die.

For the calcined gypsum, it is preferred that it contains at least 70 wt.-%, preferably at least 80 wt.-%, and even more preferably at least 90 wt.-% calcium sulphate hemihydrate.

The discharged calcined gypsum may have a particle size which is suitable for an intended further use of the calcined gypsum. If the particle size is larger than required for such use, the process preferably contains a further processing step, where the calcined gypsum, which is discharged from the extruder, is subjected to a grinding step to produce calcined gypsum with a desired particle size, e.g. with a particle size of from 1 to 1000 µm.

Similarly, it is possible that the gypsum for calcination is sized to an intended particle size, which can be the same size as noted above for the calcined gypsum or a higher particle size.

In general, the particles of the raw gypsum should have a particle size, which is small enough that a uniform temperature distribution and heating of the raw gypsum is possible. Sizing the raw gypsum prior to the calcining step the particle sizes can be adapted to better suit the dimensions of the extruder, e.g. of the extruder screw(s) and/or the inside of the extruder barrel, or the particle sizes can be adapted to the desired energy intake for heating. For calcination it is preferred that the particle size of the gypsum is higher than indicated for the calcined gypsum above, such as e.g. in the range of 0.1 to 5 mm and in particular in the range 0.2 to 3 mm. Such particle size can be determined by sieving analysis.

The sizing in the process of the present invention can be accomplished e.g. by crushing or grinding of the raw gypsum, and may be carried out by methods known in the art, for example, the incoming material may be reduced in size using a shredder, a crusher, a bucket crusher, an excavator with grapple, or simply driven over with a front end loader. In principle, any sizing, in particular crushing or grinding, equipment may be used and the person skilled in the art will be able to vary parameters of the mechanical sizing equipment to determine the proper speed, force, and time to generate raw gypsum particles having the desired particle size.

Depending on the configuration of the extruder, the extruder can also tolerate larger particle size, which may be processed to smaller particle sizes inside the extruder, such as by processing via grinding elements. Thus, in principle, it is possible that the extruder can be operated directly at a mining size.

The sizing unit, if present, may be integral to the extruder inlet, it may be attached to the beginning of the inlet or may be positioned after the outlet of the extruder.

As in the initial stage of the process step iii) the raw gypsum has to be heated from ambient temperature to the temperature where the calcium sulphate dihydrate releases water, in one embodiment, the inventive process comprises a step of heating the raw gypsum prior to feeding into the heatable extruder at a temperature of at least 50°C and preferably at least 80°C. Such heating may e. g. be accomplished at least in part by heat transfer from water, which is withdrawn from the extruder in the heating/calcination zones, or by heat exchange between the position in the extruder near the discharge outlet, where in turn the area of the extruder directly adjacent to the outlet may be cooled. Accordingly, in a preferred embodiment, the inventive process comprises the withdrawal of thermal energy from the calcined gypsum and/or water generated from the raw gypsum and the use of this thermal energy to heat the raw gypsum prior to the calcination in step iii). The area of cooling directly adjacent to the outlet may only be a short part directly adjacent to the outlet or extend from the outlet over a range of 20% or less or 10% or less of the full length of the extruder. However, in some embodiments, cooling may also be necessary in other parts of the extruder, simply for regulating the temperature as exact as possible.

In a further aspect, the present application is directed to a system for the calcination of raw gypsum, preferably a system for the implementation of a process as described above, wherein the system comprises:
i) a feed unit to feed gypsum to an extruder;
ii) downstream thereto, a heatable extruder having a calcination zone and optionally a mixing zone, wherein the heatable extruder preferably has a plurality of individual temperature setting elements;
iii) downstream thereto, a retaining device, wherein the calcined gypsum is collected, wherein the extruder is adapted to provide heating via a heated screw and/or a heated extruder barrel as well as the frictional energy during extrusion and wherein the system further comprises a grinding system, which is adapted to adjust the particle size of the calcined gypsum to 1 to 1000 µm.

The wording "downstream" in this respect is intended to mean that the respective item, under the regular course of operation of the system, is positioned such that the product of a previous unit of the system is introduced into the unit, which is downsteam thereto. E.g. the downstream unit may by positioned at a lower height than the previous ("upsteam") unit, so that the material which is processed in the unit can be transferred to the downstream unit via gravitational forces. Alternatively, the downstream unit can be positioned at the same or higher elevation than the previous unit, in which case however, the system should comprise a transfer unit such as a conveyor belt to elevate the material to the inlet the downstream unit.

The wording "retaining device" is intended to denote a container, in which the calcium gypsum is discharged from the heatable extruder, but can also be a receiving device such as a conveyor belt, by which discharged calcined gypsum can be transported to a different subsequent processing unit or a packaging unit.

As noted above, the inventive process allows the heating of raw gypsum in a manner that more heating power is provided in an area, where the raw gypsum enters the heatable extruder and less heating power is provided where the raw gypsum has been maintained at the elevated temperature for some time (and thus part thereof has been converted to calcium sulphate hemihydrate). Therefore, in a preferred embodiment, the inventive system further comprises a control system with means to determine the actual temperature of the individual temperature setting elements and regulating means to supply each of the plurality of individual temperature setting elements with sufficient power to maintain the temperature, to which the temperature setting element is to be heated. Preferably, such system further comprises means to measure the temperature of the heatable extruder, preferably in each section thereof, which is associated with or defined by a temperature setting element. In addition thereto, it is further preferred that the control means also allows for controlling the entire operation of the heatable extruder and/or the feed unit, including, but not limited to controlling the screw speed, controlling the speed, by which the feed unit supplies raw gypsum into the extruder, etc. Therefore, it is possible to quickly adapt the parameters within the process to varying raw gypsum input, wherein the raw gypsum quality can vary due to mining grounds or processing recycled gypsum of different qualities.

As noted above, the temperature setting element can be used to heat and cool respective elements of the extruder.

The extruder in the inventive system may optionally further comprise at least one of i) a device for increasing or decreasing the pressure inside the extruder, and ii) an overpressure-releasing device, in particular an overpressure-valve. This may be e. g. useful for the production of alpha-hemihydrate.

The inventive system is intended to provide calcined gypsum as a product, which may be produced in a particle size suitable for an intended further use but can also be provided in a larger particle size. In this case, the inventive system can advantageously further comprise a grinding system or means, which is downstream from the retaining device, where the particle size of calcium gypsum processed in the system can be adjusted to a desired range such as e.g. to a particle size of from 1 to 1000 µm. Suitable grinding systems or means are the same as described above in connection with the inventive process. If the system is intended to produce calcined gypsum, which is to be used for further processing at site, which in far away from the heatable extruder, the system may advantageously further comprise a packaging unit to pack the calcined gypsum into individual packages, e.g. sacks of big bags.

To safe on energy costs, it is of advantage if the inventive system is supplied with heat transfer means, where thermal energy is withdrawn form a hotter region or unit of the system or part of the product (e.g. hemihydrate) and transferred to another unit, where material is to be heated to thus use the thermal energy which is already in the process. An obvious unit to be heated in such configuration is the feed unit, from which the raw gypsum to be calcined enters the extruder and is heated therein to the calcination temperature. Obvious sources of thermal energy are the extruder or product discharged therefrom. Accordingly, in a preferred embodiment, the inventive system comprises feed unit with a heating system to heat gypsum to be fed into the extruder, wherein the heating system is supplied with waste heat from the heatable extruder. To this end, preferably the end part of the extruder is thermally coupled to the feed unit to thus cool the end part of the extruder and heat the feed unit. Alternatively, water, which is discharged from the extruder upon release of crystal water, can be used to heat the heating system of the feed unit either directly or via an intermediate heat transfer fluid. Usually, the water is discharged as steam. In a yet other embodiment heat can be withdrawn from the discharged calcinated gypsum product and can be used to heat the feed unit.

For the removal of the water, the extruder may also be provided with distinct zones for dehydration, which can contribute to energetical reuse of evaporated water within the process.

In a yet further aspect, the present invention is concerned with the use of a heatable extruder having a calcination zone and optionally a mixing zone, wherein the heatable extruder preferably has a plurality of individual temperature setting elements, or a system as described above for calcination treatment of raw gypsum, where raw gypsum is introduced into the heatable extruder and subjected to calcination treatment therein, wherein the heating is provided via a heated screw and/or a heated extruder barrel as well as the frictional energy during extrusion.

It should be understood that the processes of the present invention and the systems of the present invention and the above described extruder are interconnected. This means that effects and facts explained with regard to the one also applies to the other as long as that makes sense and does not create contradictions. It should further be understood that the respective features outlined above and in the claims can be combined in any suitable manner, as long as that makes sense and does not create contradictions.

In the following, the invention will be further explained by means by examples, which are given however for illustrative purposes only and are not to be construed as limiting to the invention in any relevant manner.

### Examples

### Example 1:

The tests were performed with a twin screw extruder with a total length of 500 mm. In case of the 500 mm extruder, there were five elements and the elements 2 to 5 were heated (element 1 was the element directly at the inlet). The heating temperature was the same for all temperature setting elements. Elements 2 and 3 consumed more energy than the other, because the ground gypsum had to be heated up mainly while passing these two elements. All screw elements were screw conveyor elements.

The respective extruders were charged with ground raw gypsum with a particle size of about 1 mm, which contained < 90% calcium sulphate dihydrate and residual amounts of calcite and dolomite. The gypsum did not contain hemihydrate or anhydrite.

In a first set of experiments, the dependence on the calcination temperature was investigated. To this end, 50°C was chosen as the lowest extruder temperature which was increased in 25° C steps to 350°C. The extruder in these experiments was run at 50 screw turns/min. The dosage of gypsum into the extruder was 2 kg/h. After extrusion and treatment of the gypsum in the extruder, a sample was taken and analysed for its content of calcium sulphate diyhdrate, hemihydrate and anhydrite by XRD.

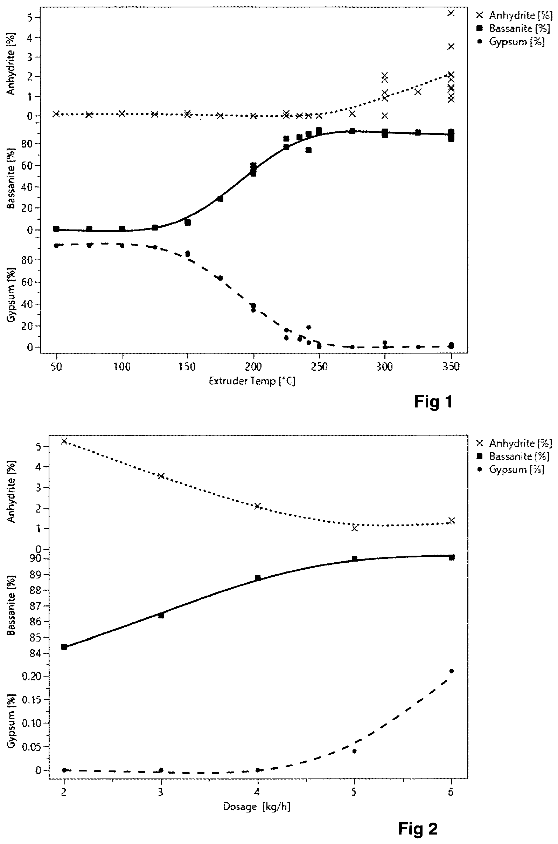

The results of these tests are given in **Figure 1****.** As can be seen therein, calcium sulphate hemihydrate starts to form at a temperature of about 150°C and at 175°C there is conversion to the hemihydrate to about 25%. At temperature of about 225°C about 80 to 90% hemihydrate is obtained and above a temperature about 300°C minor quantities of the anhydrite are formed.

In a subsequent set of experiments, the dosage of the raw gypsum was varied in the range of 2 to 6 kg/h, where the extruder temperature was adjusted to 350°C over the elements 2 to 5 and the screw speed to 150 turns/min. The results of these experiments are shown in the enclosed **Figure 2****.** As can be seen in this figure, a good conversion of the raw gypsum to the hemihydrate can be achieved with dosages of about 5 and 6 kg/h, whereas lower dosages provided a higher quantity of anhydrite. However, this may be due to the high temperature applied.

### Example 2

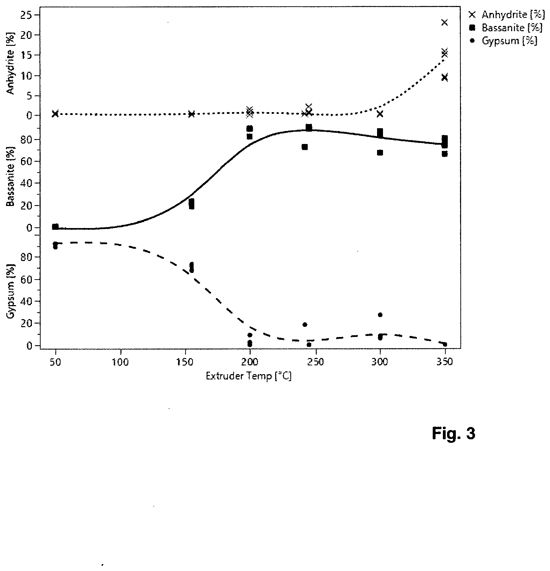

The tests were performed with a twin screw extruders with a total length of 1100 mm. The 1100 mm extruder had 11 elements, of which elements 2 to 11 were heated. The calcination in the extruder was performed with varying extruder temperature of 50°C to 350°C as in Example 1. The results of these test are shown in **Figure 3****.** In this figure, it is apparent that the profile of calcium sulphate dihydrate to hemihydrate to anhydrite is slightly shifted to lower temperatures in comparison to the results in example 1. At 150°C about 20% of the hemihydrate was detected and at about 200°C 80 to 90 % of the hemihydrate were found. At 350°C significant quantities of anhydrite (10 to 20%) had formed which is attributable to a longer exposition of the gypsum to higher temperatures as the result of the longer extruder design.

### Example 3

For the Extruder design of example 2 the residence times of the raw gypsum in the extruder were calculated for different screw speeds and different feeding rates of the gypsum. The results of this calculation are shown in the below table 1.

**Table 1**

| Residence time | | Feeding rate | | | |
|---|---|---|---|---|---|
| | | 2 kg/h | 3 kg/h | 4 kg/h | 6 kg/h |
| Screw speed | 200/min | 29 s | 24 s | 22 s | 19 s |
| | 150/min | 35 s | 28 s | 26 s | 23 s |
| | 100/min | 42 s | 37 s | 32 s | 30 s |
| | 50/min | 60 s | 57 s | 54 s | 52 s |

As can be seen from Table 1, the residence time gets shorter by rotating faster. Further, the more gypsum is fed at constant speed, the shorter is residence time, which is rather surprising.

## Claims

1. Process for the calcination of raw gypsum in a heatable extruder, comprising or consisting of the following steps:
i) providing raw gypsum as a powder or as a paste;
ii) feeding the raw gypsum into a heatable extruder having a calcination zone and optionally a mixing zone;
iii)heating the raw gypsum in the calcination zone of the extruder, particularly to temperatures of between 150°C and 350°C, to provide a calcined gypsum, wherein at least 50 wt.-% of the CaSO₄ has been converted to calciumsulfate hemihydrate, while withdrawing crystal water from the raw gypsum, wherein the heating is provided via a heated screw and/or a heated extruder barrel as well as the frictional energy during extrusion, and
iv)discharging the calcined gypsum from the extruder.

2. Process according to claim 1, wherein the gypsum is mineral gypsum, FGD gypsum or recycled gypsum with a content of at least 30 wt.-%, preferably at least 50 wt.-%, more preferably at least 80 wt.-% and even more preferably at least 90 wt.-% calcium sulphate dihydrate and/or wherein the calcined gypsum discharged from the extruder contains at least 70 wt.-%, preferably at least 80 wt.-%, and even more preferably at least 90 wt.-% calciumsulfate hemihydrate.

3. Process according to claim 1 or 2, wherein the heatable extruder has a plurality of individual temperature setting elements, which are adapted to heat a respective part of the extruder to an intended temperature and/or wherein the heatable extruder has three or more temperature setting elements and preferably four to ten temperature setting elements, wherein preferably the temperature setting elements are heated to the same temperature.

4. Process according to any one of claims 1 to 3, wherein the temperature of the raw gypsum in step iii) is adjusted to between 160°C and 300°C, more preferably between 170°C and 250 °C.

5. Process according to any one of the preceding claims, wherein raw gypsum is fed to the heatable extruder in an amount of 2 to 6 kg/(h x EV), wherein EV is the empty volume of the heatable extruder in L and/or wherein the heatable extruder is a twin screw extruder and/or wherein the extruder screw of the heatable extruder is rotated at a speed of 50 to 200 turns/min, preferably 80 to 150 turns/min.

6. Process according to any one of the preceding claims, wherein i) the raw gypsum is processed in the extruder with a residence time of 10 s to 5 min preferably in the range of 10 s to 2 min, more preferably in the range of 10 s to 1 min and/or ii) wherein the raw gypsum powder, which is introduced into the process, has a particle size of 0.1 to 5 mm and preferably 0.2 to 3 mm, or wherein the particles in the gypsum paste, which is introduced into the process, have such particle size.

7. Process according to any one of the preceding claims, wherein the calcined gypsum, which is discharged from the extruder, is further subjected to a grinding step to produce calcined gypsum with a particle size of from 1 to 1000 µm.

8. Process according to any one of the preceding claims, wherein the raw gypsum prior to feeding into a heatable extruder is heated to a temperature of at least 50°C and preferably at least 80°C.

9. Process according to any one of the preceding claims, wherein thermal energy is withdrawn from the calcined gypsum and/or water generated from the raw gypsum and is used to heat the raw gypsum prior to the calcination in step iii).

10. Process according to any one of the preceding claims, wherein the process is performed in a vacuum atmosphere.

11. System for the calcination of raw gypsum wherein the system comprises
i) a feed unit to feed raw gypsum to an extruder;
ii) downstream thereto, a heatable extruder having a calcination zone and optionally a mixing zone, wherein the heatable extruder preferably has a plurality of individual temperature setting elements;
iii) downstream thereto, a retaining device, wherein the calcined gypsum is collected,
wherein the extruder is adapted to provide heating via a heated screw and/or a heated extruder barrel as well as the frictional energy during extrusion and wherein the system further comprises a grinding system, which is adapted to adjust the particle size of the calcined gypsum to 1 to 1000 µm, preferably, wherein the system further comprises a control system with means to determine the actual temperature of the individual temperature setting elements and control means to supply each of the plurality of individual temperature setting elements with sufficient energy to maintain the temperature, to which the temperature setting element is to be heated.

12. System according to claim 11, wherein the system further comprises a packaging unit to pack the calcined gypsum into individual packages.

13. System according to claim 11 or 12, wherein the feed unit has a heating system to heat raw gypsum to be fed into the extruder, wherein the heating system is supplied with waste heat form the heatable extruder, preferably wherein the end part of the extruder is thermally coupled to the feed unit to thus cool the end part of the extruder and heat the feed unit.

14. System according to any one of claim 11 to 13, wherein the individual temperature setting elements of the extruder are heatable and coolable.

15. Use of a heatable extruder having a calcination zone and optionally a mixing zone, wherein the heatable extruder preferably has a plurality of individual temperature setting elements, or a system according to any one of claims 11 to 14 for calcination treatment of raw gypsum, where raw gypsum is introduced into the heatable extruder and subjected to calcination treatment therein, wherein the heating is provided via a heated screw and/or a heated extruder barrel as well as the frictional energy during extrusion.

## Patentansprüche

1. Verfahren zur Kalzinierung von Rohgips in einem beheizbaren Extruder, das die folgenden Schritte umfasst oder daraus besteht:
i) Bereitstellen von Rohgips als ein Pulver oder als eine Paste;
ii) Zuführen des Rohgipses in einen beheizbaren Extruder mit einer Kalzinierungszone und gegebenenfalls einer Mischzone;
iii) Erhitzen des Rohgipses in der Kalzinierungszone des Extruders, insbesondere auf Temperaturen zwischen 150 °C und 350 °C, um einen kalzinierten Gips bereitzustellen, wobei mindestens 50 Gew.-% des CaSO₄ in Calciumsulfat-Halbhydrat umgewandelt wurden, während Kristallwasser dem Rohgips entzogen wurde, wobei das Erhitzen über eine erhitzte Schnecke und/oder einen erhitzen Extruderzylinder sowie die Reibungsenergie während der Extrusion bereitgestellt wird, und
iv) Ausstoßen des kalzinierten Gipses aus dem Extruder.

2. Verfahren nach Anspruch 1, wobei der Gips mineralischer Gips, REA-Gips oder recycelter Gips mit einem Gehalt von mindestens 30 Gew.-%, vorzugsweise mindestens 50 Gew.-%, weiter bevorzugt mindestens 80 Gew.-% und noch weiter bevorzugt mindestens 90 Gew.-% Calciumsulfat-Dihydrat ist und/oder wobei der kalzinierte Gips, der aus dem Extruder ausgestoßen wird, mindestens 70 Gew.-%, vorzugsweise mindestens 80 Gew.-% und noch weiter bevorzugt mindestens 90 Gew.-% Calciumsulfat-Halbhydrat enthält.

3. Verfahren nach Anspruch 1 oder 2, wobei der beheizbare Extruder eine Vielzahl von individuellen Temperatureinstellelementen aufweist, die dazu ausgelegt sind, einen jeweiligen Teil des Extruders auf eine beabsichtigte Temperatur zu erhitzen, und/oder wobei der beheizbare Extruder drei oder mehr Temperatureinstellelemente und vorzugsweise vier bis zehn Temperatureinstellelemente aufweist, wobei vorzugsweise die Temperatureinstellelemente auf die gleiche Temperatur erhitzt werden.

4. Verfahren nach einem der Ansprüche 1 bis 3, wobei die Temperatur des Rohgipses in Schritt iii) auf zwischen 160 °C und 300 °C, weiter bevorzugt zwischen 170 °C und 250 °C eingestellt wird.

5. Verfahren nach einem der vorhergehenden Ansprüche, wobei Rohgips dem beheizbaren Extruder in einer Menge von 2 bis 6 kg/(h x EV) zugeführt wird, wobei EV das Leervolumen des beheizbaren Extruders in L ist und/oder wobei der beheizbare Extruder ein Doppelschneckenextruder ist und/oder wobei die Extruderschnecke des beheizbaren Extruders bei einer Geschwindigkeit von 50 bis 200 Umdrehungen/min, vorzugsweise 80 bis 150 Umdrehungen/min gedreht wird.

6. Verfahren nach einem der vorhergehenden Ansprüche, wobei i) der Rohgips in dem Extruder mit einer Verweilzeit von 10 s bis 5 min, vorzugsweise im Bereich von 10 s bis 2 min, weiter bevorzugt im Bereich von 10 s bis 1 min verarbeitet wird und/oder ii) wobei das Rohgipspulver, das in das Verfahren eingebracht wird, eine Partikelgröße von 0,1 bis 5 mm und vorzugsweise 0,2 bis 3 mm aufweist oder wobei die Partikel in der Gipspaste, die in das Verfahren eingebracht wird, eine derartige Partikelgröße aufweisen.

7. Verfahren nach einem der vorhergehenden Ansprüche, wobei der kalzinierte Gips, der aus dem Extruder ausgestoßen wird, ferner einem Mahlschritt unterzogen wird, um kalzinierten Gips mit einer Partikelgröße von 1 bis 1000 µm zu produzieren.

8. Verfahren nach einem der vorhergehenden Ansprüche, wobei der Rohgips vor dem Zuführen in einen beheizbaren Extruder auf eine Temperatur von mindestens 50 °C und vorzugsweise mindestens 80 °C erhitzt wird.

9. Verfahren nach einem der vorhergehenden Ansprüche, wobei Wärmeenergie dem kalzinierten Gips und/oder Wasser, das aus dem Rohgips erzeugt wird, entzogen wird und verwendet wird, um den Rohgips vor der Kalzinierung in Schritt iii) zu erhitzen.

10. Verfahren nach einem der vorhergehenden Ansprüche, wobei das Verfahren in einer Vakuumatmosphäre durchgeführt wird.

11. System zur Kalzinierung von Rohgips, wobei das System Folgendes umfasst:
i) eine Zufuhreinheit, um Rohgips einem Extruder zuzuführen;
ii) stromabwärts davon einen beheizbaren Extruder mit einer Kalzinierungszone und gegebenenfalls einer Mischzone, wobei der beheizbare Extruder vorzugsweise eine Vielzahl von individuellen Temperatureinstellelementen aufweist;
iii) stromabwärts davon eine Haltevorrichtung, in der der kalzinierte Gips aufgefangen wird,
wobei der Extruder dazu ausgelegt ist, ein Erhitzen über eine erhitzte Schnecke und/oder einen erhitzten Extruderzylinder sowie die Reibungsenergie während der Extrusion bereitzustellen, und wobei das System ferner ein Mahlsystem umfasst, das dazu ausgelegt ist, die Partikelgröße des kalzinierten Gipses auf 1 bis 1000 µm einzustellen, wobei vorzugsweise das System ferner ein Steuersystem mit Mitteln zum Bestimmen der tatsächlichen Temperatur der individuellen Temperatureinstellelemente und Steuermitteln zum Zuführen von ausreichender Energie zu jedem der Vielzahl von individuellen Temperatureinstellelementen, um die Temperatur beizubehalten, auf die das Temperatureinstellelement zu erhitzen ist, umfasst.

12. System nach Anspruch 11, wobei das System ferner eine Verpackungseinheit umfasst, um den kalzinierten Gips in individuelle Packungen zu verpacken.

13. System nach Anspruch 11 oder 12, wobei die Zufuhreinheit ein Heizsystem zum Erhitzen von Rohgips, der in den Extruder zuzuführen ist, aufweist, wobei das Heizsystem mit Abwärme aus dem beheizbaren Extruder versorgt wird, wobei vorzugsweise der Endteil des Extruders thermisch mit der Zufuhreinheit gekoppelt ist, um somit den Endteil des Extruders zu kühlen und die Zufuhreinheit zu erhitzen.

14. System nach einem der Ansprüche 11 bis 13, wobei die individuellen Temperatureinstellelemente des Extruders beheizbar und kühlbar sind.

15. Verwendung eines beheizbaren Extruders mit einer Kalzinierungszone und gegebenenfalls einer Mischzone, wobei der beheizbare Extruder vorzugsweise eine Vielzahl von individuellen Temperatureinstellelementen aufweist, oder System nach einem der Ansprüche 11 bis 14 zur Kalzinierungsbehandlung von Rohgips, wobei Rohgips in den beheizbaren Extruder eingebracht wird und einer Kalzinierungsbehandlung darin unterzogen wird, wobei das Erhitzen über eine erhitzte Schnecke und/oder einen erhitzten Extruderzylinder sowie die Reibungsenergie während der Extrusion bereitgestellt wird.

## Revendications

1. Procédé pour la calcination de gypse brut dans une extrudeuse chauffante, comprenant ou consistant en les étapes suivantes :
i) apport de gypse brut sous forme de poudre ou de pâte ;
ii) alimentation en gypse brut d'une extrudeuse chauffante comportant une zone de calcination et facultativement une zone de mélange ;
iii) chauffage du gypse brut dans la zone de calcination de l'extrudeuse, en particulier à des températures entre 150 °C et 350 °C, afin d'obtenir un gypse calciné, dans lequel au moins 50 % en poids du CaSO₄ ont été convertis en sulfate de calcium hémihydraté, tout en éliminant l'eau de cristallisation du gypse brut, dans lequel le chauffage est assuré via une vis chauffée et/ou un cylindre d'extrudeuse chauffé, ainsi que par l'énergie de frottement pendant l'extrusion, et
iv) évacuation du gypse calciné de l'extrudeuse.

2. Procédé selon la revendication 1, dans lequel le gypse est du gypse minéral, du gypse issu de la désulfuration des gaz de combustion (FGD) ou du gypse recyclé avec une teneur d'au moins 30 % en poids, de préférence d'au moins 50 % en poids, plus préférentiellement d'au moins 80 % en poids et encore plus préférentiellement d'au moins 90 % en poids de sulfate de calcium dihydraté et/ou dans lequel le gypse calciné évacué de l'extrudeuse contient au moins 70 % en poids, de préférence au moins 80 % en poids, et encore plus préférentiellement au moins 90 % en poids de sulfate de calcium hémihydraté.

3. Procédé selon la revendication 1 ou 2, dans lequel l'extrudeuse chauffante comporte une pluralité d'éléments de réglage de température individuels, qui sont adaptés pour chauffer une partie respective de l'extrudeuse à une température souhaitée et/ou dans lequel l'extrudeuse chauffante comporte trois éléments de réglage de température ou plus, et de préférence quatre à dix éléments de réglage de température, dans lequel de préférence les éléments de réglage de température sont chauffés à la même température.

4. Procédé selon l'une quelconque des revendications 1 à 3, dans lequel la température du gypse brut à l'étape iii) est ajustée entre 160 °C et 300 °C, plus préférentiellement entre 170 °C et 250 °C.

5. Procédé selon l'une quelconque des revendications précédentes, dans lequel l'extrudeuse chauffante est alimentée en du gypse brut en une quantité de 2 à 6 kg/(h x EV), dans lequel EV est le volume à vide de l'extrudeuse chauffante en L et/ou dans lequel l'extrudeuse chauffante est une extrudeuse à double vis et/ou dans lequel la vis d'extrudeuse de l'extrudeuse chauffante tourne à une vitesse de 50 à 200 tours/min, de préférence de 80 à 150 tours/min.

6. Procédé selon l'une quelconque des revendications précédentes, dans lequel i) le gypse brut est traité dans l'extrudeuse avec un temps de séjour de 10 s à 5 min, de préférence dans la plage de 10 s à 2 min, plus préférentiellement dans la plage de 10 s à 1 min, et/ou ii) dans lequel la poudre de gypse brut, qui est introduite dans le procédé, présente une granulométrie de 0,1 à 5 mm et de préférence de 0,2 à 3 mm, ou dans lequel les particules dans la pâte de gypse, qui est introduite dans le procédé, présentent une telle granulométrie.

7. Procédé selon l'une quelconque des revendications précédentes, dans lequel le gypse calciné, qui est évacué de l'extrudeuse, est en outre soumis à une étape de broyage pour produire du gypse calciné ayant une granulométrie de 1 à 1 000 µm.

8. Procédé selon l'une quelconque des revendications précédentes, dans lequel le gypse brut, avant qu'une extrudeuse chauffante en soit alimentée, est chauffé à une température d'au moins 50 °C et de préférence d'au moins 80 °C.

9. Procédé selon l'une quelconque des revendications précédentes, dans lequel de l'énergie thermique est extraite du gypse calciné et/ou de l'eau générée à partir du gypse brut, et est utilisée pour chauffer le gypse brut avant la calcination à l'étape iii).

10. Procédé selon l'une quelconque des revendications précédentes, dans lequel le procédé est effectué dans une atmosphère sous vide.

11. Système pour la calcination de gypse brut, dans lequel le système comprend
i) une unité d'alimentation pour alimenter une extrudeuse en gypse brut ;
ii) en aval de celle-ci, une extrudeuse chauffante comportant une zone de calcination et facultativement une zone de mélange, dans lequel l'extrudeuse chauffante comporte de préférence une pluralité d'éléments de réglage de température individuels ;
iii) en aval de celle-ci, un dispositif de rétention dans lequel le gypse calciné est collecté,
dans lequel l'extrudeuse est adaptée pour assurer un chauffage via une vis chauffée et/ou un cylindre d'extrudeuse chauffé ainsi que par l'énergie de frottement pendant l'extrusion, et dans lequel le système comprend en outre un système de broyage, qui est adapté pour ajuster la granulométrie du gypse calciné entre 1 et 1 000 µm, de préférence, dans lequel le système comprend en outre un système de commande doté de moyens pour déterminer la température réelle des éléments de réglage de température individuels et de moyens de commande pour apporter à chacun de la pluralité d'éléments de réglage de température individuels une énergie suffisante pour maintenir la température à laquelle l'élément de réglage de température doit être chauffé.

12. Système selon la revendication 11, dans lequel le système comprend en outre une unité d'emballage pour emballer le gypse calciné en emballages individuels.

13. Système selon la revendication 11 ou 12, dans lequel l'unité d'alimentation comporte un système de chauffage pour chauffer du gypse brut destiné à l'alimentation de l'extrudeuse, dans lequel le système de chauffage est fourni en chaleur résiduelle formée de l'extrudeuse chauffant, de préférence dans lequel la partie d'extrémité de l'extrudeuse étant couplée thermiquement à l'unité d'alimentation afin de refroidir ainsi la partie d'extrémité de l'extrudeuse et de chauffer l'unité d'alimentation.

14. Système selon l'une quelconque des revendications 11 à 13, dans lequel les éléments de réglage de température individuels de l'extrudeuse peuvent être chauffés et refroidis.

15. Utilisation d'une extrudeuse chauffante comportant une zone de calcination et facultativement une zone de mélange, dans laquelle l'extrudeuse chauffante comporte de préférence une pluralité d'éléments de réglage de température individuels, ou d'un système selon l'une quelconque des revendications 11 à 14 pour le traitement par calcination de gypse brut, où du gypse brut est introduit dans l'extrudeuse chauffante et y est soumis à un traitement par calcination, dans laquelle le chauffage est assuré par une vis chauffée et/ou un cylindre d'extrudeuse chauffé ainsi que par l'énergie de frottement pendant l'extrusion.
